# EUROPEAN PATENT APPLICATION

(11) **EP 2 335 526 A1**
(43) Date of publication of application: **22.06.2011**
(21) Application number: 10425371.1
(22) Date of filing: 06.12.2010
(51) Int. Cl.: A47B 96/20, B29C 39/10, B29C 39/02, B29C 70/70, B29C 33/30

(54) **Method for coating wood panels or similar and mold used in such method**

(30) Priority: 10.12.2009 IT RM20090651
(71) Applicant: Compositi & Co. s.r.l., I-60129 Ancona (AN) (IT)
(72) Inventor: Cartuccia, Giovanni, 60129 Ancona (IT); Mosci, Massimo, 60129 Ancona (IT)
(74) Representative: Gitto, Serena

(57) **Abstract**

The invention relates to a method for coating panels (1), particularly panels comprised of wood or paperboard or foam or similar materials, and every combination of the same materials, supporting a surface coating and finishing layer, to obtain coated panels, particularly to be employed as surface for furniture and furnishing, each one comprised of one of said panels (1) one of said coating layer, **characterized in that** it comprises the steps of:
-preparing a mould (2);
-inserting a panel (1) to be coated within said mould (2);
-introducing a flowable coating material within said mould (2) up to fully submerge said panel;
-extracting said panel (1) from said mould (2) after that said coating material is cured on the same panel, thus obtaining said coated panel.

## Description

The present invention relates to a method for coating wood panels or similar and mould used in such method.

The present invention can be advantageously employed in the furniture industry.

Coated panels which are prepared before are assembled to realise furniture, or parts thereof. Said panels are made up of not precious wood, such as plywood, hardboard and like.

In the present invention it will be widely meant by wood or like, every wood based material or synthetic material resembling wood mechanical features such as PVC, foamed materials, alveolar materials, ecc.

Then, panels are coated by sheets made up of more precious materials, in order to confer to the panel the required aesthetic and/or functional features.

In other words, panels coated in order to confer to the same a more pleasant aesthetic aspect or to provide them with suitable mechanical surface features, such as, e.g., resistance to scratches or shocks, waterproof ad like.

Precious materials employed for coating said panels are natural materials, such as wood, or synthetic materials.

In known coating methods, coating materials are available as prefabricated sheets. The latter must be cut in order to obtain a number of portions sufficient to fully cover the panel. Such an operation is particularly relevant and difficult to be carried out since it is necessary reducing at most production wastes, mainly in view of high costs of coating sheets.

Therefore, once obtained the sheet portions, it can be necessary that the same are pantographated and further processed by thermo-shaping.

Portion obtained must be then precisely trimmed and cleaned. Then, said portions are glued on panel to be coated by gluing materials that, usually, are very expensive.

Once realised the coating, panels must be subjected to a step of removal of excessive gluing material by a smoothing and finishing process that can also be repeated more than once.

Thus, known methods are particularly expensive and difficult.

In fact, as noted in the above, sheet coating material employed in known coating methods requires specific machines for realising some working steps. For example, it is necessary having numeric control machines for cutting and finishing sheets or cut portions of the sheets, as well as ovens and moulds for thermo-shaping of said portions.

Said machines, besides being very bulky, are usually also very expensive.

Furthermore, known methods are characterised by remarkable wastes of coating material, with a consequent and not acceptable increase of manufacturing costs.

Moreover, use of coating material sheets in known coating methods implies frequent need of having highly specialised personnel to handle said material.

Finally, coating material sheets are very large. Therefore, they are difficult to be moved and to use.

Thus, technical object of the present invention is that of suggesting a method for coating wood panels and a mould used in said method overcoming the above drawbacks.

Particularly, it is an object of the present invention that of suggesting a method for coating wood panels which is simple and cheap to realise.

Still, it is an object of the present invention that of suggesting a method for coating wood panels, remarkably reducing manufacturing wastes. Furthermore, it is an object of the present invention that of suggesting a mould for realising said method for coating wood panels which is simple and versatile.

According to the present invention, the above technical object and the other results described in the above are obtained by a method for coating panels, particularly panels comprised of wood or paperboard or foam or similar materials, and every combination of the same materials, supporting a surface coating and finishing layer, to obtain coated panels, particularly to be employed as surface for furniture and furnishing, each one comprised of one of said panels one of said coating layer, **characterized in that** it comprises the steps of:
- preparing a mould (2);
- inserting a panel (1) to be coated within said mould (2);
- introducing a flowable coating material within said mould up to fully submerge said panel;
- extracting said panel from said mould after that said coating material is cured on the same panel, thus obtaining said coated panel.

Further features of the method are described in the dependent claim.

In a particularly preferred embodiment of the invention, coupling between a panel and elements to be built-in the same panel comprises the steps of:
- taking a coated panel having a finishing surface layer at least on its upper surface;
- realizing a through opening in said coated panel, such as a window, for said fixture element to be coupled, said opening being delimitated by an edge perimeter zone, provided in correspondence of the thickness of the coated panel;
- inserting a first mould half shell in said opening, said mould for realizing said fixture element to be coupled;
- inserting a second half shell mould in said opening, said mould for realizing said fixture element to be coupled, said first and second half shell realizing, in the space realized between them and said edge perimeter zone, a mould substantially defining the shape of said fixture element to be realized;
- creating vacuum within said mould;
- injecting fluid material within said mould in order to realize, by mould shaping, said fixture element, and for coupling the same with said coated panel, coupling substantially occurring in correspondence of said perimeter zone; and
- removing said mould half shells.

Particularly, according to the invention, said step of realizing a through opening in said coated panel comprises realizing in said perimeter zone a projecting portion, having a substantially perimeter profile for said through opening, obtained in the coating layer of the upper surface of the coated panel, and mainly projecting toward centre of said through opening with respect to the remaining portion of the perimeter zone, obtained from said panel.

Particularly, according to the invention, said method can comprise coupling of a plurality of elements in the same panel.

Preferably, according to the invention, material injected within said mould is the same material employed for the upper and/or lower finishing coating of said panel.

Furthermore, according to the invention, it can be provided a step of realization, on said perimeter zone, of at least a recess, to receive said fluid material during the injection step, in order to obtain a better anchoring between said coated panel and said fixture element.

The invention further relates to a mould for realizing a coating method according to the above comprising a base wall defining a base surface of said mould a plurality of lateral walls, connected with said base wall, **characterized in that** at least one of said lateral walls is movable in order to vary dimension of said space.

Further features of the mould are described in the dependent claims.

Further features and advantages of the present invention will be more clearly evident from the illustrative, but not limitative, specification of a preferred but not exclusive embodiment of a method for coating wood panels and of a mould employed in said method, as shown in the enclosed drawings, wherein:
figures 1 - 3 show respective schematic views of steps of a method for coating wood panels according to the present invention;
figure 4 is a schematic view relevant to a step of an alternative embodiment of method according to the present invention; and
figure 5 shows a perspective view of a mould for realising the method according to the present invention.

Making reference to the enclosed figures, by reference number 1 it is indicated a panel to be coated.

Said panel 1 is generically realised with a parallelepiped shape. However, method according to the present invention can be also applied to panels with a different shape.

Panel 1 if made up of wood. More particularly, said panel 1 can be made up of plywood, hardboard and like.

In order to coat panel 1, it is necessary preparing a mould 2 defining inside a housing space 3, within which said panel 1 can be housed.

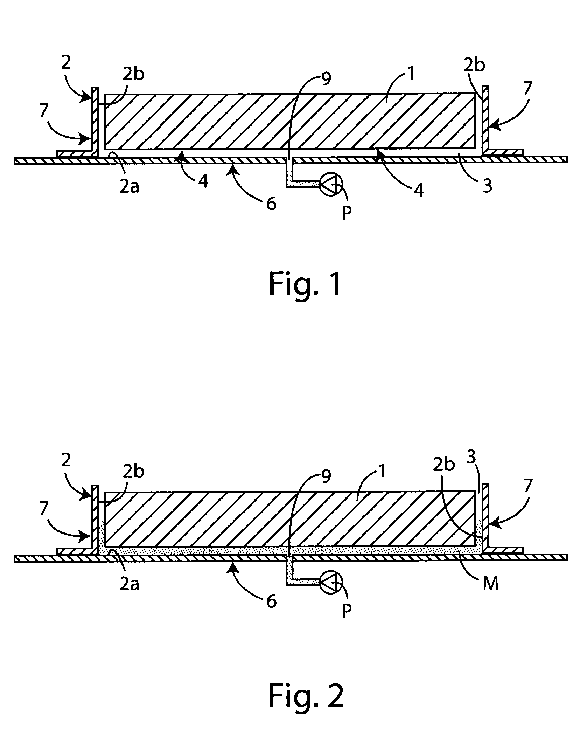

Insertion of panel 1 within mould 2 space 3 is obtained so as to keep spaced panel 1 at least with respect to mould 2 bottom 2a (figure 1).

However, said features are not essential and panel 1 can be resting directly on mould 2.

In order to obtain distance, suitable spacing bodies 4 are provided on bottom surface 2a, before laying down panel 1.

Sizes of spacing bodies 4 correspond to thickness of coating to place on panel 1.

Advantageously, panel 1 is inserted within space 3, so that it is suitable spaced from mould lateral surfaces 2b. In this case too, distance separating panel 1 from lateral walls 2b is equal to thickness of desired coating. After deposition of panel 1 within space 3, a set portion of a coating fluid material "M" is introduced within space 3 of mould 2 (figure 2).

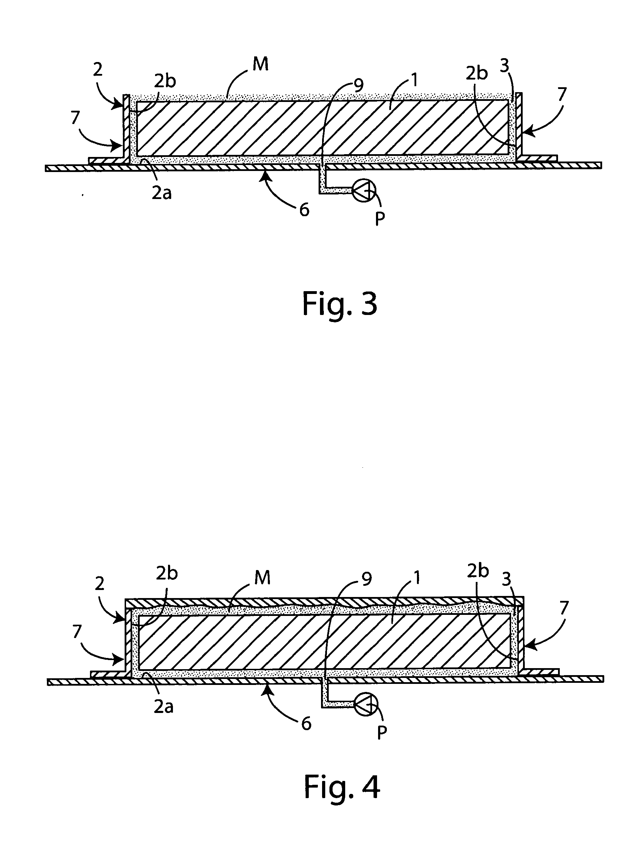

Specifically, filling operation ends when inner part of panel 1 is covered by coating material "M" (figure 3). Thus, volume of coating material "M" volume introduced within space 3 is a function of space 3 volume and of sizes of panel 1. Advantageously, filling in of space 3 by coating material "M" is realised injecting said material through bottom surface 2a of the mould 2, by a suitable pump "P". Thus, coating material "M" easily and in a uniform shape, reaches space between panel 1 and mould 2.

Coating material used is a synthetic material. More specifically, coating material comprises at least a synthetic resin and a catalyzing additive. The latter, also indicated as "hardening" material, is introduced in a set amount, which is function of amount and type of synthetic resin. Said resin can be an epoxy or acrylic or polyurethane resin, or another kind of resin, or, as an alternative, it can be polyester.

In an embodiment, coating material further comprises a portion of aluminium tri-hydrate. Said component is introduced within coating material with a 3:2 ratio. In other words, by a resin amount corresponding to 1 kg, and amount of aluminium tri-hydrate of 1.5 kg is introduced.

Aluminium tri-hydrate confers to coating material necessary mechanical features. Furthermore, it confers to coating material optimum fire resistance features.

In an alternative embodiment, aluminium tri-hydrate is replaced by a portion of powder mineral material. The latter, besides conferring good mechanical features, is necessary to give to the coating material a particular aesthetic effect.

For example, said material is comprised of micro-granules of quartz, marble, stone, or of other minerals.

In any case, coating material further comprises a set portion of colouring paste suitable to provide the coated panel 1 with the desired colour.

Once filling and panel 1 covering operation is terminated, it is necessary waiting for a set time interval necessary to chemical reactions for resin curing, and coating material hardens.

Now, coated panel 1 is extracted from mould 2 to be possibly subjected to finishing treatments.

In this alternative embodiment (shown in figure 4), coating method further comprises step of closing mould 2 space 3 by a lid 5 that can be overlapped to mould 2, so as to insulate space 3.

In this case, whole space 3 is filled in by coating material up to lick lid 5.

Lib 5 has suitable holes, not shown, for outlet of air during filling in of mould 2.

The latter has an inner surface 5a faced toward space 3 on which a set shaping (not shown) is obtained.

For example, said shaping is a decorative pattern to be copied on coated panel 1.

Mould 2 setting step is realised preparing before a base wall 6 of mould 2. Said base wall 6 at least partially defines above upper bottom of mould 2.

Then, it is necessary connecting a plurality of lateral walls 7, coupled each other to define space 3 with wall 6.

At least one of lateral walls 7 is movable with respect to the others in order to vary at least a dimension of space 3 to receive different panels 1.

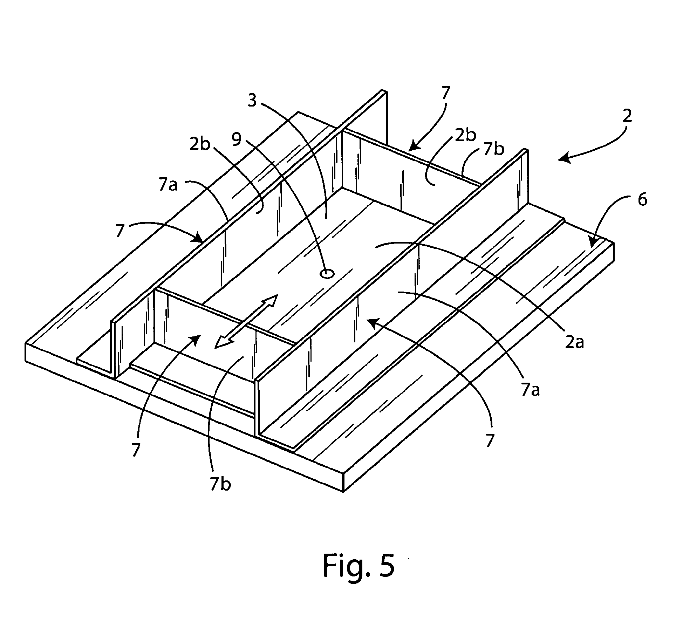

In this embodiment, mould 2 comprises two first lateral walls 7a, parallel each other. Furthermore, mould 2 comprises second lateral walls 7b, parallel each other and provided between first lateral walls 7a, so as to define space 3. At least one of said walls 7b is slidable between fixed walls 7a, according to direction of arrow in figure 5.

To set mould 2, it is thus necessary associating first lateral walls 7a fixed on base wall 6. Particularly, first lateral walls 7a are so placed to be spaced each other according to a set distance which is strictly function of dimensions of panel to be coated.

Then, second lateral walls 7b are connected so that they are between first lateral walls 7a. In the preferred embodiments, first lateral walls 7a are perpendicular with respect to second lateral walls 7b, so that space 3 has a parallelepiped shape.

Once lateral walls 7 are associated with base wall 6, it is necessary fixing them with the latter by suitable connection means (not shown in the figures). Said connection means can be mechanical or magnetic means. For example, mechanical connection means can be comprised of a plurality of clamps.

Base wall 6 has at least a through hole 9, necessary to introduce coating material "M" within space 3.

Advantageously, base wall 6 comprises a plurality of holes 9, the number of which is a function of panel 1 dimensions.

Invention obtains set objects and remarkable advantages.

Panel coated according to the present invention is a seamless monolithic product.

In fact, it is not necessary using known coating materials which are solid sheets.. therefore, they are no more necessary specific machines to carry out specific preparations, treatments or finishings of said sheets. Thus, method is simple to be realised.

Furthermore, in view of its simplicity, it is not necessary presence of skilled personnel.

Still, method for coating wood panels according to the present invention is cheap since only necessary amount of coating material is employed, preventing useless and expensive manufacturing wastes. Thus, manufacturing costs are greatly reduced.

## Claims

1. Method for coating panels (1), particularly panels comprised of wood or paperboard or foam or similar materials, and every combination of the same materials, supporting a surface coating and finishing layer, to obtain coated panels, particularly to be employed as surface for furniture and furnishing, each one comprised of one of said panels (1) one of said coating layer, **characterized in that** it comprises the steps of:
- preparing a mould (2);
- inserting a panel (1) to be coated within said mould (2);
- introducing a flowable coating material within said mould (2) up to fully submerge said panel;
- extracting said panel (1) from said mould (2) after that said coating material is cured on the same panel, thus obtaining said coated panel.

2. Method according to claim 1, **characterized in that** step of insertion of a panel (1) to be coated within said mould (2) provides that said panel (1) is provided space (3)d from a bottom surface (2a) (2a) of said mould (2).

3. Method according to one of the preceding claims, **characterized in that** the step of preparing said mould (2) comprises the steps of:
- preparing a base wall (6) defining said bottom surface (2a);
- connecting a plurality of lateral walls (7) with said base wall (6) in order to define a receiving space (3) (3) for said panel to be coated, at least one of said lateral walls (7) being a movable wall;
- fixing said lateral walls (7) to said base wall (6) by mechanical or magnetic means.

4. Method according to one of the preceding claims, **characterized in that** said coating material comprises at least a synthetic resin and a catalyzing additive, said synthetic resin being preferably an epoxy or acrylic or polyurethane resin or polyester based resin.

5. Method according to claim 4, **characterized in that** said coating material further comprises a portion of aluminium trihydrate.

6. Method according to claim 4 or 5, **characterized in that** said coating material further comprises a portion of powder or granule mineral material.

7. Method according to one of the preceding claims from 2 to 6, **characterized in that** it further comprises a step of closure of said space (3) by a lid (5) that can be placed over said mould before the step of introduction of the coating material.

8. Method according to one of the preceding claims from 2 to 7, **characterized in that** step of introduction of the coating material is realized up to fully filling in said space (3).

9. Method according to one of the preceding claims, **characterized in that** the step of introduction of the coating material (M) is realized injecting said coating material (M) through said bottom surface (2a) of said mould (2).

10. Method according to one of the preceding claims, **characterized in that** it comprises a coupling step, between said coated panel and a fixture element for said panel, the latter being particularly shaped with a curved surface, and obtained by an injection shaping in correspondence of a through opening prepared on the same coated panel.

11. Method according to claim 10, **characterized in that** said coupling step comprises the steps of:
- taking a panel coated with a finishing coating layer at least on its upper surface;
- realizing a through opening in said coated panel, such as a window, for said fixture element to be coupled, said opening being delimitated by a edge perimeter zone, provided in correspondence of the thickness of the coated panel;
- inserting a first mould half shell in said opening, said mould for realizing said fixture element to be coupled;
- inserting a second half shell mould in said opening, said mould for realizing said fixture element to be coupled, said first and second half shell realizing, in the space (3) realized between them and said edge perimeter zone, a mould substantially defining the shape of said fixture element to be realized;
- creating vacuum within said mould;
- injecting fluid material within said mould in order to realize, by mould shaping, said fixture element, and for
coupling the same with said coated panel, coupling substantially occurring in correspondence of said perimeter zone; and
- removing said mould half shells.

12. Method according to claim 11, **characterized in that** the step of realizing a through opening in said coated panel comprises realizing in said perimeter zone a projecting portion, having a substantially perimeter profile for said through opening, obtained in the coating layer of the upper surface of the coated panel, and mainly projecting toward centre of said through opening with respect to the remaining portion of the perimeter zone, obtained from said panel.

13. Method according to one of the claims 10 - 12, **characterized in that** it is provided coupling of a plurality of fixtures to the same panel.

14. Method according to one of the claims 11 - 13, **characterized in that** it comprises a step of realization, on said perimeter zone, of at least a recess, to receive said fluid material during the injection step, in order to obtain a better anchoring between said coated panel and said fixture element.

15. Method according to one of the claims 10 - 14, **characterized in that** material injected within said mould is the same material employed for the upper finishing coating of said panel.

16. Mould for realizing a coating method according to each one of the claims 1 - 9, comprising a base wall (6) defining a base surface of said mould a plurality of lateral walls (7), connected with said base wall (6), **characterized in that** at least one of said lateral walls (7) is movable in order to vary dimension of said space (3).

17. Mould according to claim 16, **characterized in that** it comprises two first lateral parallel walls (7a) and two second parallel lateral walls (7b) provided between said first lateral walls (7a).

18. Mould according to claim 16 or 17, **characterized in that** it comprises means for connection between said lateral walls (7) and said base wall (6); said connection means being preferably mechanical or magnetic means.

19. Mould according to one of the preceding claims 16 - 18, **characterized in that** it further comprises a lid (5) for completely close said space (3).

20. Mould according to claim 19, **characterized in that** said lid (5) has an inner surface (5a), faced toward said space (3), having a set shaping.
